(19)

Europäisches
Patentamt
European
Patent Office
Office européen
des brevets

(11) **EP 3 330 849 A1**

(12) **EUROPEAN PATENT APPLICATION**
published in accordance with Art. 153(4) EPC

(43) Date of publication:
**06.06.2018   Bulletin 2018/23**

(21) Application number: **16790508.2**

(22) Date of filing: **23.05.2016**

(51) Int Cl.:
***G06F 9/445*** (2018.01)

(86) International application number:
**PCT/JP2016/065162**

(87) International publication number:
**WO 2017/022300 (09.02.2017 Gazette 2017/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **31.07.2015   JP 2015151954**

(71) Applicant: **Kyocera Document Solutions Inc.
Osaka-shi, Osaka 540-8585 (JP)**

(72) Inventor: **TOYODA, Takashi
Osaka-shi
Osaka 540-8585 (JP)**

(74) Representative: **Plougmann Vingtoft a/s
Rued Langgaards Vej 8
2300 Copenhagen S (DK)**

(54) **ELECTRONIC DEVICE**

(57)   An electronic apparatus (10) includes: a non-volatile memory (17) supporting at least a first reading speed and a second reading speed higher than the first reading speed and that stores a boot program; and a memory controller (18) for which the first reading speed is initially set, the boot program includes an initial load program that is initially read by the memory controller and loaded and a subsequent load program that is read by the memory controller and loaded after the initial load program, and the electronic apparatus (10) functions as a reading speed setting portion (25) that sets a reading speed of the memory controller (18) to the second reading speed, by executing the loaded initial load program.

FIG. 4

```
        START
          │
          ▼              ─S51
  LOAD INITIAL LOAD PROGRAM
     OF BOOT PROGRAM
          │
          ▼              ─S52
   SET TO SECOND READING
          SPEED
          │
          ▼              ─S53
  START LOAD OF SUBSEQUENT
   LOAD PROGRAM OF BOOT
         PROGRAM
          │
          ▼              ─S54
   LOAD SUBSEQUENT LOAD
  PROGRAM OF BOOT PROGRAM
          │
          ▼              ─S55
  PERFORM SETTING OF VARIOUS
         DEVICES
          │
          ▼              ─S56
    START LOAD OF FIRMWARE
          │
          ▼              ─S57
       LOAD FIRMWARE
          │
          ▼
         END
```

EP 3 330 849 A1

**Description**

TECHNICAL FIELD

The present invention relates to an electronic apparatus that loads a boot program.

BACKGROUND ART

Conventionally, an electronic apparatus that loads a boot program has been known (see, e.g., Patent Literature 1 and 2).

CITATION LIST

[PATENT LITERATURE]

[PTL 1] Japanese Laid-Open Patent Publication No. 2012-098972
[PTL 2] Japanese Laid-Open Patent Publication No. 2013-246630

SUMMARY OF THE INVENTION

PROBLEMS TO BE SOLVED BY THE INVENTION

However, in the conventional electronic apparatus, there is a possibility that a reading speed at which the boot program is read is set to be lower than an optimum speed. In recent years, the boot program not only has been a program for boot-up but also has supported various functions such as countermeasures for security, and thus has an increased size. Therefore, in the case where the reading speed at which the boot program is read is set to be lower than the optimum speed, the conventional electronic apparatus has a problem that the time required for loading the entirety of the boot program is long.
Therefore, an object of the present invention is to provide an electronic apparatus and a boot program with which a time required for loading the entirety of the boot program can be shortened

SOLUTION TO THE PROBLEMS

An electronic apparatus according to an aspect of the present invention includes: a non-volatile memory supporting at least a first reading speed and a second reading speed higher than the first reading speed and that stores a boot program; and a memory controller for which the first reading speed is initially set. The boot program includes an initial load program that is initially read by the memory controller and loaded, and a subsequent load program that is read by the memory controller and loaded after the initial load program. The electronic apparatus functions as a reading speed setting portion that sets a reading speed of the memory controller to the second reading speed, by executing the loaded initial load program.

ADVANTAGEOUS EFFECTS OF THE INVENTION

With the electronic apparatus and the boot program of the present invention, the time required for loading the entirety of the boot program can be shortened.

BRIEF DESCRIPTION OF THE DRAWINGS

[FIG. 1] FIG. 1 is a block diagram of an MFP according to an embodiment of the present invention.
[FIG. 2] FIG. 2 is a diagram showing an example of a boot program shown in FIG. 1.
[FIG. 3] FIG. 3 is a block diagram of functions of a control portion shown in FIG. 1.
[FIG. 4] FIG. 4 is a flowchart of an operation upon boot-up of the MFP shown in FIG. 1.
[FIG. 5A] FIG. 5A is a diagram showing a time course of load of programs by the control portion shown in FIG. 1.
[FIG. 5B] FIG. 5B is a diagram showing the time course of load of the programs by the control portion shown in FIG. 1.

[FIG. 5C] FIG. 5C is a diagram showing the time course of load of the programs by the control portion shown in FIG. 1.
[FIG. 6] FIG. 6 is a block diagram of the MFP shown in FIG. 1 at a time when boot-up is started.
[FIG. 7] FIG. 7 is a block diagram of the MFP shown in FIG. 1 when a reading speed is changed.

DESCRIPTION OF EMBODIMENTS

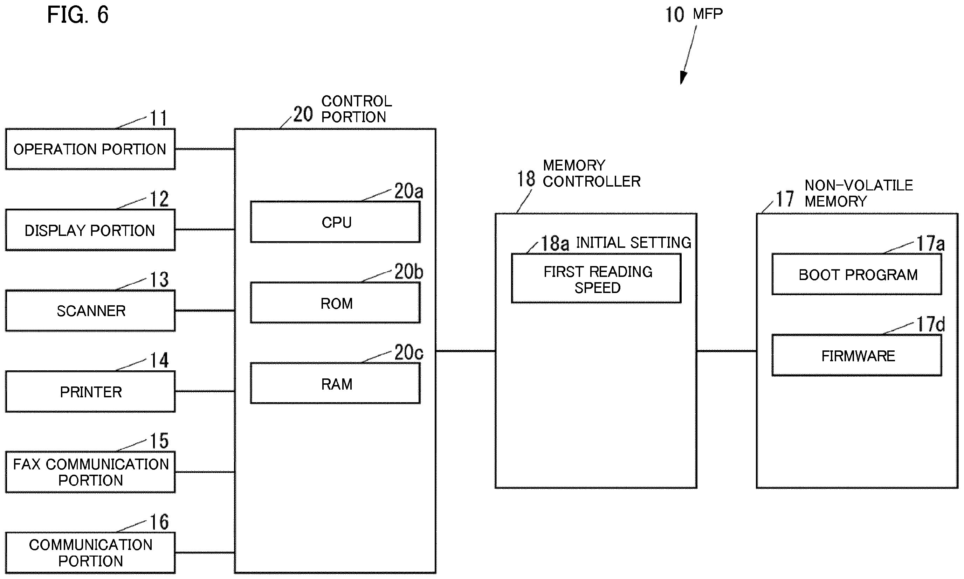

Hereinafter, an embodiment of the present invention will be described with reference to the drawings.
First, the configuration of an MFP (multifunction peripheral) as an electronic apparatus according to the present embodiment will be described.

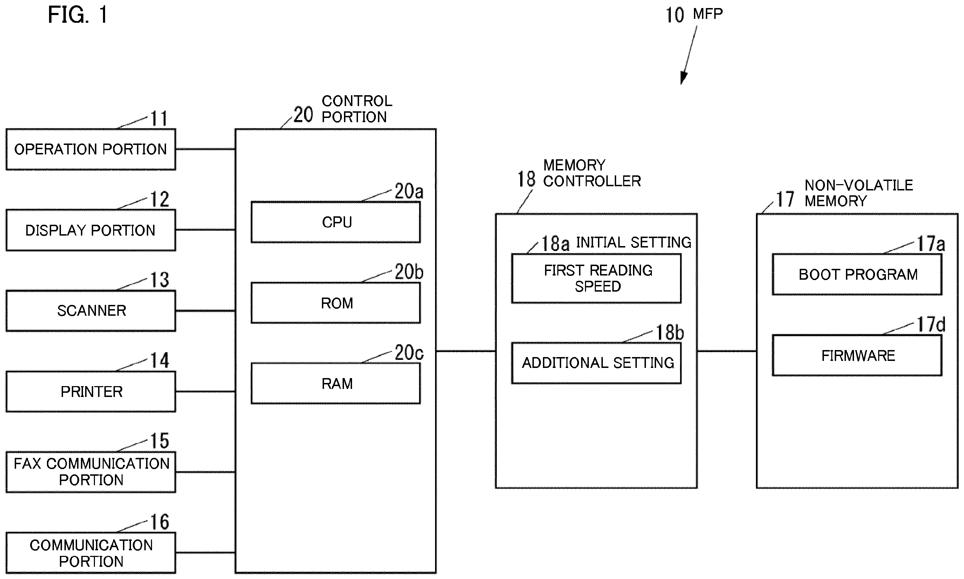

FIG. 1 is a block diagram of the MFP 10 according to the present embodiment.
As shown in FIG. 1, the MFP 10 includes: an operation portion 11 that is an input device such as a button with which various operations are inputted; a display portion 12 that is a display device such as an LCD (liquid crystal display) which displays various types of information; a scanner 13 that is a reading device which reads an image from a document; a printer 14 that is a printing device which executes printing on a recording medium such as a sheet; a fax communication portion 15 that is a fax device which performs fax communication with an external facsimile apparatus, which is not shown, via a communication line such as a public telephone line; a communication portion 16 that is a network communication device which performs communication with an external apparatus via a network such as a LAN (local area network); a non-volatile memory 17 such as a semiconductor memory, an HDD (hard disk drive), or the like which stores various types of information; a memory controller 18 that controls the non-volatile memory 17; and a control portion 20 that controls the entirety of the MFP 10.
The non-volatile memory 17 supports at least a first reading speed and a second reading speed higher than the first reading speed. For example, the first reading speed and the second reading speed are 500 KB/sec and 3.5 MB/sec, respectively.
The non-volatile memory 17 has stored therein a boot program 17a and firmware 17d. Each of the boot program 17a and the firmware 17d may be installed into the MFP 10 during manufacture of the MFP 10, may be additionally installed into the MFP 10 from an external storage medium such as a CD, a DVD, an SD card, a USB (universal serial bus) memory, or the like, or may be additionally installed into the MFP 10 from a network.

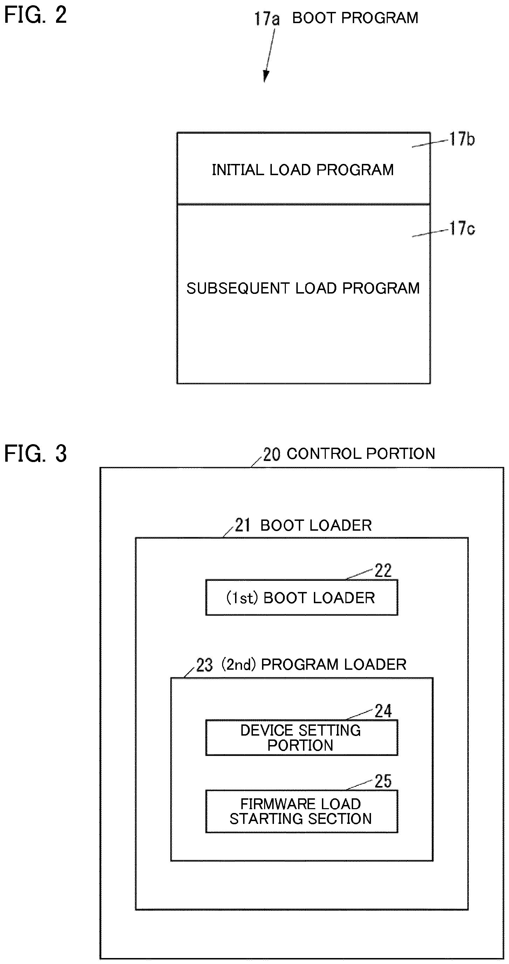

FIG. 2 is a diagram showing an example of the boot program 17a.
As shown in FIG. 2, the boot program 17a includes: an initial load program 17b that is initially read by the memory controller 18 (see FIG. 1) and loaded; and a subsequent load program 17c that is read by the memory controller 18 and loaded after the initial load program 17b.
The initial load program 17b is a program only for setting the reading speed of the memory controller 18 to the second reading speed. The initial load program 17b may be incorporated into hardware in the form of a microcode or the like.
The subsequent load program 17c is a program for performing processing other than processing performed by execution of the initial load program 17b, among processing performed by execution of the boot program 17a.
As shown in FIG. 1, the memory controller 18 has stored therein an initial setting 18a as a reading speed. The memory controller 18 sets, as the initial setting 18a, a lowest first reading speed supported by various types of non-volatile memories among the reading speeds supported by the memory controller 18, such that various types of non-volatile memories that are mountable on the MFP 10 are enabled to be controlled.
The memory controller 18 is capable of storing an additional setting 18b as a reading speed.
The control portion 20 includes, for example, a CPU (central processing unit) 20a, a ROM (read only memory) 20b that has stored therein programs and various types of data, and a RAM (random access memory) 20c that is used as a working area for the CPU 20a. The CPU 20a executes a program stored in the non-volatile memory 17 or the ROM 20b.
FIG. 3 is a block diagram of functions of the control portion 20.
As shown in FIG. 3, the control portion 20 functions as a boot loader 21 by executing the boot program 17a (see FIG. 2). Specifically, the control portion 20 functions as a (1st) boot loader 22 of the boot loader 21 by executing the loaded initial load program 17b (see FIG. 2), and functions as a (2nd) program loader 23 of the boot loader 21 by executing the loaded subsequent load program 17c (see FIG. 2).
The (1st) boot loader 22 sets the reading speed of the memory controller 18 to the second reading speed and functions as a reading speed setting portion of the present invention.
The (2nd) program loader 23 functions as: a device setting portion 24 that performs setting of various devices such as the operation portion 11, the display portion 12, the scanner 13, the printer 14, the fax communication portion 15, and the communication portion 16, etc.; and a firmware load starting section 25 that starts load of the firmware 17d.
Next, operation of the MFP 10 will be described.

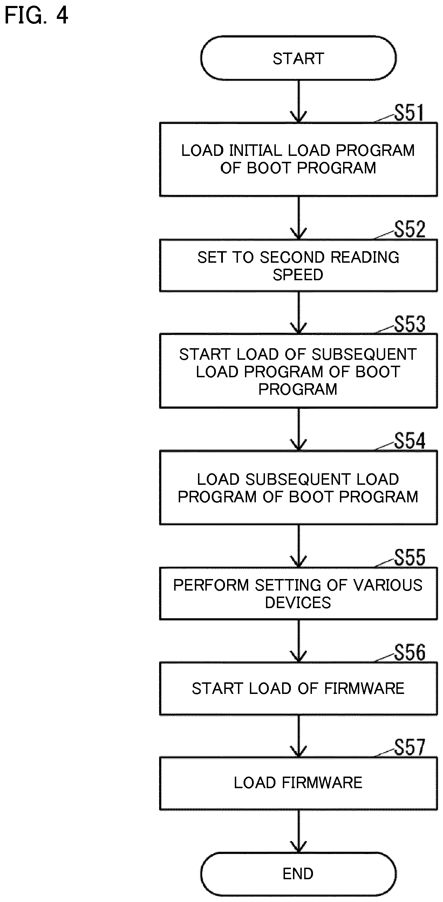

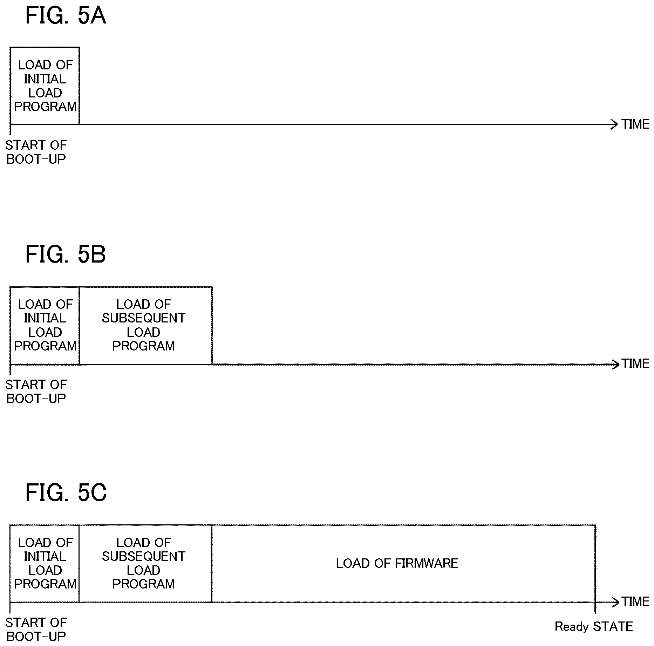

FIG. 4 is a flowchart of an operation at boot-up of the MFP 10. FIG. 5 shows diagrams showing a time course of load of programs by the control portion 20.
As shown in FIG. 4, when boot-up is started, the control portion 20 causes the memory controller 18 to read the initial load program 17b of the boot program 17a from the non-volatile memory 17 and writes the initial load program 17b read by the memory controller 18, into the RAM 20c, thereby loading the initial load program 17b (S51) as shown in FIG. 5A. Here, since the additional setting 18b (see FIG. 1) has not been made as shown in FIG. 6 at the time when boot-up is started, the memory controller 18 reads the initial load program 17b at the first reading speed of the initial setting 18a.

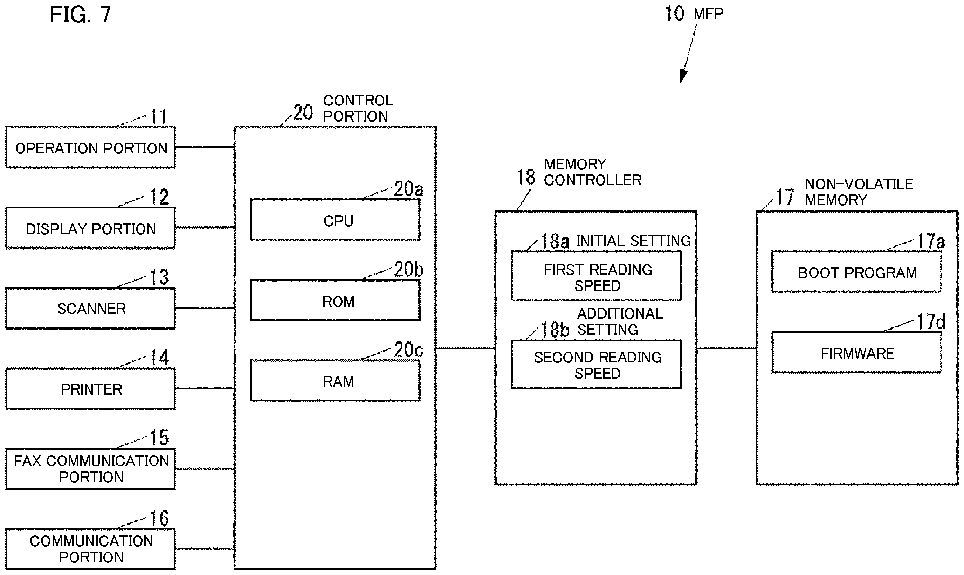

Next, the (1st) boot loader 22, which functions by the control portion 20 executing the loaded initial load program 17b, sets the reading speed of the memory controller 18 to the second reading speed as the additional setting 18b (S52) as shown in FIG. 7. Here, the (1st) boot loader 22 can set, as the second reading speed, the highest speed among the reading speeds supported by the non-volatile memory 17 in which the boot program 17a is stored.

Next, the (1st) boot loader 22 starts load of the subsequent load program 17c (S53).

Accordingly, the control portion 20 causes the memory controller 18 to read the subsequent load program 17c of the boot program 17a from the non-volatile memory 17 and writes the subsequent load program 17c read by the memory controller 18, into the RAM 20c, thereby loading the subsequent load program 17c (S54) as shown in FIG. 5B. Here, since the additional setting 18b has been made as shown in FIG. 7, the memory controller 18 reads the subsequent load program 17c at the second reading speed of the additional setting 18b.

Next, the device setting portion 24 of the (2nd) program loader 23, which functions by the control portion 20 executing the loaded subsequent load program 17c, performs setting of various devices (S55).

Next, the firmware load starting section 25 of the (2nd) program loader 23, which functions by the control portion 20 executing the loaded subsequent load program 17c, starts load of the firmware 17d (S56).

Accordingly, the control portion 20 causes the memory controller 18 to read the firmware 17d from the non-volatile memory 17 and writes the firmware 17d read by the memory controller 18, into the RAM 20c, thereby loading the firmware 17d (S57) as shown in FIG. 5C. Here, since the additional setting 18b has been made as shown in FIG. 7, the memory controller 18 reads the firmware 17d at the second reading speed of the additional setting 18b.

As described above, after the MFP 10 sets, by causing the memory controller 18 to read the initial load program 17b of the boot program 17a at the first reading speed of the initial setting 18a and loading the initial load program 17b (S51), the reading speed of the memory controller 18 to the second reading speed higher than the first reading speed (S52), the MFP 10 causes the memory controller 18 to read the subsequent load program 17c of the boot program 17a different from the initial load program 17b at the second reading speed and loads the subsequent load program 17c (S54). Thus, the MFP 10 can shorten the time required for loading the entirety of the boot program 17a.

The case where, for example, the sizes of the initial load program 17b and the subsequent load program 17c are 4 KB and 124 KB, respectively, and the first reading speed and the second reading speed are 500 KB/sec and 3.5 MB/sec, respectively, will be described.

When the memory controller 18 is caused to read the entirety of the boot program 17a at the first reading speed of the initial setting 18a, the time required for loading the entirety of the boot program 17a is about 250 msec according to the following formula.

$$(4 \text{ KB} + 124 \text{ KB}) / 500 \text{ KB/sec} \approx 250 \text{ msec}$$

Meanwhile, when the memory controller 18 is caused to read the initial load program 17b of the boot program 17a at the first reading speed of the initial setting 18a and read the subsequent load program 17c of the boot program 17a at the second reading speed of the additional setting 18b, the time required for loading the entirety of the boot program 17a is about 45 msec according to the following formula.

$$4 \text{ KB} / 500 \text{ KB} + 124 \text{ KB} / 3.5 \text{ MB/sec} \approx 45 \text{ msec}$$

As shown in the above example, when the memory controller 18 is caused to read the initial load program 17b of the boot program 17a at the first reading speed of the initial setting 18a and read the subsequent load program 17c of the boot program 17a at the second reading speed of the additional setting 18b, the time required for loading the entirety of the boot program 17a can be significantly shortened as compared to the case where the memory controller 18 is caused to read the entirety of the boot program 17a at the first reading speed of the initial setting 18a.

The MFP 10 can shorten the time required for loading the entirety of the boot program 17a. Thus, as a result, the MFP 10 can shorten a boot-up time. The case upon boot-up of the MFP 10 has been described above, but the same applies to a time when the MFP 10 returns from a power saving mode to a normal mode. That is, the MFP 10 can also shorten a return time from the power saving mode to the normal mode.

The MFP 10 causes the memory controller 18 to read the firmware 17d at the second reading speed and loads the firmware 17d. Thus, the MFP 10 can also shorten the time required for loading the firmware 17d.

The electronic apparatus of the present invention is the MFP in the present embodiment, but may be an image forming apparatus other than the MFP, such as a copying machine, a printer, a FAX apparatus, and a scanner, or may be an electronic apparatus other than the image forming apparatus, such as a personal computer (PC).

In the electronic apparatus of the present invention, the subsequent load program may be at least a program for starting load of firmware, and the firmware may be stored in the non-volatile memory.

With this configuration, the electronic apparatus of the present invention causes the memory controller to read the firmware at the second reading speed and loads the firmware, and thus can shorten the time required for loading the firmware.

In the electronic apparatus of the present invention, the first reading speed is the lowest speed supported by the non-volatile memory among the reading speeds supported by the memory controller, and the second reading speed is the highest speed among the reading speeds supported by the non-volatile memory.

In addition, the boot program according to the present invention is a boot program executed by an electronic apparatus including: a non-volatile memory supporting at least a first reading speed and a second reading speed higher than the first reading speed and that stores the boot program; and a memory controller for which the first reading speed is initially set, the boot program including an initial load program that is initially read by the memory controller and loaded and a subsequent load program that is read by the memory controller and loaded after the initial load program, wherein the electronic apparatus is caused to function as a reading speed setting portion that sets a reading speed of the memory controller to the second reading speed, by the loaded initial load program being executed by the electronic apparatus.

With this configuration, the electronic apparatus of the present invention is capable of controlling various types of non-volatile memories that are mountable on the electronic apparatus, at the lowest speed, and causes the memory controller to read the subsequent load program at the highest speed and loads the subsequent load program. Thus, the electronic apparatus can shorten the time required for loading the entirety of the boot program.

**Claims**

1. An electronic apparatus comprising:

   a non-volatile memory supporting at least a first reading speed and a second reading speed higher than the first reading speed and that stores a boot program; and
   a memory controller for which the first reading speed is initially set, wherein
   the boot program includes an initial load program that is initially read by the memory controller and loaded, and a subsequent load program that is read by the memory controller and loaded after the initial load program, and
   the electronic apparatus functions as a reading speed setting portion that sets a reading speed of the memory controller to the second reading speed, by executing the loaded initial load program.

2. The electronic apparatus according to claim 1, wherein
   the subsequent load program is at least a program for starting load of firmware, and
   the firmware is stored in the non-volatile memory.

3. The electronic apparatus according to claim 1, wherein
   the first reading speed is a lowest speed supported by the non-volatile memory among reading speeds supported by the memory controller, and
   the second reading speed is a highest speed among reading speeds supported by the non-volatile memory.

EP 3 330 849 A1

FIG. 1

10 MFP

CONTROL
20 PORTION

MEMORY
18 CONTROLLER

NON-VOLATILE
17 MEMORY

| 11 OPERATION PORTION |
| 12 DISPLAY PORTION |
| 13 SCANNER |
| 14 PRINTER |
| 15 FAX COMMUNICATION PORTION |
| 16 COMMUNICATION PORTION |

20a CPU

20b ROM

20c RAM

18a INITIAL SETTING

FIRST READING
SPEED

18b

ADDITIONAL SETTING

17a BOOT PROGRAM

17d FIRMWARE

FIG. 2

17a BOOT PROGRAM

17b INITIAL LOAD PROGRAM

17c SUBSEQUENT LOAD PROGRAM

FIG. 3

20 CONTROL PORTION

21 BOOT LOADER

22 (1st) BOOT LOADER

23 (2nd) PROGRAM LOADER

24 DEVICE SETTING PORTION

25 FIRMWARE LOAD STARTING SECTION

FIG. 4

```
              ┌─────────────┐
              │    START    │
              └──────┬──────┘
                     │          ╭S51
              ┌──────▼──────────────┐
              │ LOAD INITIAL LOAD    │
              │ PROGRAM OF BOOT      │
              │ PROGRAM              │
              └──────┬──────────────┘
                     │          ╭S52
              ┌──────▼──────────────┐
              │ SET TO SECOND        │
              │ READING SPEED        │
              └──────┬──────────────┘
                     │          ╭S53
              ┌──────▼──────────────┐
              │ START LOAD OF        │
              │ SUBSEQUENT LOAD      │
              │ PROGRAM OF BOOT      │
              │ PROGRAM              │
              └──────┬──────────────┘
                     │          ╭S54
              ┌──────▼──────────────┐
              │ LOAD SUBSEQUENT LOAD │
              │ PROGRAM OF BOOT      │
              │ PROGRAM              │
              └──────┬──────────────┘
                     │          ╭S55
              ┌──────▼──────────────┐
              │ PERFORM SETTING OF   │
              │ VARIOUS DEVICES      │
              └──────┬──────────────┘
                     │          ╭S56
              ┌──────▼──────────────┐
              │ START LOAD OF        │
              │ FIRMWARE             │
              └──────┬──────────────┘
                     │          ╭S57
              ┌──────▼──────────────┐
              │ LOAD FIRMWARE        │
              └──────┬──────────────┘
                     │
              ┌──────▼──────┐
              │     END     │
              └─────────────┘
```

FIG. 5A

```
┌──────────┐
│ LOAD OF  │
│ INITIAL  │
│  LOAD    │
│ PROGRAM  │
└──────────┴────────────────────────────────────────────→ TIME
```
START OF
BOOT-UP

FIG. 5B

```
┌──────────┬──────────────┐
│ LOAD OF  │   LOAD OF    │
│ INITIAL  │  SUBSEQUENT  │
│  LOAD    │    LOAD      │
│ PROGRAM  │   PROGRAM    │
└──────────┴──────────────┴──────────────────────────────→ TIME
```
START OF
BOOT-UP

FIG. 5C

```
┌──────────┬──────────────┬────────────────────────────────┐
│ LOAD OF  │   LOAD OF    │                                │
│ INITIAL  │  SUBSEQUENT  │        LOAD OF FIRMWARE         │
│  LOAD    │    LOAD      │                                │
│ PROGRAM  │   PROGRAM    │                                │
└──────────┴──────────────┴────────────────────────────────┴──→ TIME
```
START OF                                          Ready STATE
BOOT-UP

FIG. 6

OPERATION PORTION 11

DISPLAY PORTION 12

SCANNER 13

PRINTER 14

FAX COMMUNICATION PORTION 15

COMMUNICATION PORTION 16

20 CONTROL PORTION

CPU 20a

ROM 20b

RAM 20c

18 MEMORY CONTROLLER

18a INITIAL SETTING

FIRST READING SPEED

17 NON-VOLATILE MEMORY

BOOT PROGRAM 17a

FIRMWARE 17d

10 MFP

EP 3 330 849 A1

# FIG. 7

10 MFP

**11** OPERATION PORTION

**12** DISPLAY PORTION

**13** SCANNER

**14** PRINTER

**15** FAX COMMUNICATION PORTION

**16** COMMUNICATION PORTION

**20** CONTROL PORTION
- **20a** CPU
- **20b** ROM
- **20c** RAM

**18** MEMORY CONTROLLER
- **18a** INITIAL SETTING — FIRST READING SPEED
- **18b** ADDITIONAL SETTING — SECOND READING SPEED

**17** NON-VOLATILE MEMORY
- **17a** BOOT PROGRAM
- **17d** FIRMWARE

EP 3 330 849 A1

## INTERNATIONAL SEARCH REPORT

| International application No. |
|---|
| PCT/JP2016/065162 |

A. CLASSIFICATION OF SUBJECT MATTER
*G06F9/445(2006.01)i*

According to International Patent Classification (IPC) or to both national classification and IPC

B. FIELDS SEARCHED

Minimum documentation searched (classification system followed by classification symbols)
G06F9/445

Documentation searched other than minimum documentation to the extent that such documents are included in the fields searched
Jitsuyo Shinan Koho       1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-134736 A  (Fujifilm Corp.),<br>12 June 2008 (12.06.2008),<br>paragraphs [0032] to [0043], [0052] to [0054]<br>& US 2008/0126776 A1 | 1-3 |
| A | JP 63-153635 A  (Hitachi, Ltd.),<br>27 June 1988 (27.06.1988),<br>entire text; all drawings<br>(Family: none) | 1-3 |
| A | Kido Program Boot·Loader Nyumon, CQ Publishing<br>Co., Ltd., 01 September 2009 (01.09.2009),<br>pages 53 to 54, 2. SH-4 Series no Gaibu Bus<br>Shokika Rei | 1-3 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 July 2016 (04.07.16) | Date of mailing of the international search report<br>12 July 2016 (12.07.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**EP 3 330 849 A1**

**Patent documents cited in the description**

- JP 2012098972 A

- JP 2013246630 A